# EUROPÄISCHE PATENTANMELDUNG

(11) **EP 2 119 925 A1**
(43) Veröffentlichungstag der Anmeldung: **18.11.2009**
(21) Anmeldenummer: 08008858.6
(22) Anmeldetag: 13.05.2008
(51) Int. Cl.: F16C 33/66, F16C 37/00, C10M 127/02, C10M 127/04, C10M 129/06

(54) **Schmiermittel mit leicht flüchtigem Additiv für die Schmierung schnell laufender Maschinen**

(71) Anmelder: SIEMENS AKTIENGESELLSCHAFT, 80333 München (DE)
(72) Erfinder: Gerbert, Karl, Dr., 97424 Schweinfurt (DE); Gebert, Kurt, 91541 Rothenburg (DE)

(57) **Zusammenfassung**

Eine Maschine weist Wälzlager (3) auf, in denen eine Welle (2) der Maschine relativ zu einem Grundkörper (1) der Maschine drehbar gelagert ist. Die Wälzlager (3) weisen jeweils einen relativ zum Grundkörper (1) ortsfesten Grundkörperlagerring (7) und einen relativ zur Welle (2) ortsfesten Wellenlagerring (8) auf. Zwischen den Grundkörperlagerringen (7) und den Wellenlagerringen (8) sind Wälzelemente (9) angeordnet. Die Maschine weist ein Schmiermittelreservoir (10) auf, in dem sich ein Schmiermittel (11) befindet. Die Maschine weist Schmiermittelzuführeinrichtungen (12,13) auf, die mit dem Schmiermittelreservoir (10) verbunden sind und von denen das Schmiermittel (11) zumindest auf die Wellenlagerringe (8) aufbringbar ist. Das Schmiermittel enthält ein Öl (17) und mindestens ein mit dem Öl (17) verträgliches Additiv (18). Das Öl (17) weist einen Ölsiedepunkt (T) auf, das Additiv (18) einen Additivsiedepunkt (T'). Der Additivsiedepunkt (T') liegt weit unterhalb des Ölsiedepunkts (T).

## Beschreibung

Die vorliegende Erfindung betrifft ein Schmiermittel für Wälzlager einer Maschine,
- wobei das Schmiermittel ein Öl enthält, das einen Ölsiedepunkt aufweist,
- wobei das Schmiermittel mindestens ein mit dem Öl verträgliches Additiv enthält, das einen Additivsiedepunkt aufweist.

Die vorliegende Erfindung betrifft weiterhin eine Maschine,
- wobei die Maschine Wälzlager aufweist, in denen eine Welle der Maschine relativ zu einem Grundkörper der Maschine drehbar gelagert ist,
- wobei die Wälzlager jeweils einen relativ zum Grundkörper ortsfesten Grundkörperlagerring und einen relativ zur Welle ortsfesten Wellenlagerring aufweisen,
- wobei zwischen den Grundkörperlagerringen und den Wellenlagerringen Wälzelemente angeordnet sind,
- wobei die Maschine ein Schmiermittelreservoir aufweist, in dem sich ein Schmiermittel der obenstehend beschriebenen Art befindet,
- wobei die Maschine Schmiermittelzuführeinrichtungen aufweist, die mit dem Schmiermittelreservoir verbunden sind und von denen das Schmiermittel zumindest auf die Wellenlagerringe aufbringbar ist.

Schließlich betrifft die vorliegende Erfindung ein Betriebsverfahren für eine derartige Maschine,
- wobei die Welle mit einer Drehzahl rotiert wird,
- wobei auf die Wellenlagerringe ein Schmiermittel der obenstehend beschriebenen Art aufgebracht wird,
- wobei die Drehzahl derart ist, dass die Wellenlagerringe Wellenlagerringtemperaturen annehmen.

Die obenstehend beschriebenen Gegenstände sind allgemein bekannt. Insbesondere sind verschiedene Schmiermittel wie obenstehend beschrieben zusammengesetzt. Auch ist der Aufbau der Maschine üblich.

Beim Betrieb von Maschinen treten in den Wälzlagern Reibungsverluste auf. Die Reibungsverluste erzeugen Wärme, welche die Wälzlager erwärmen. Die Wärme muss aus den Wälzlagern abgeführt werden. Kann die Wärme nicht in hinreichendem Umfang abgeführt werden, so treten thermische Verlagerungen und thermische Veränderungen der Lagergeometrie auf. Weiterhin verändern sich durch die Erwärmung die kinematischen Verhältnisse im Wälzlager. Dies kann zu hohen Flächenpressungen und sogar zur Zerstörung des Lagers führen.

Um die Wärme aus den Wälzlagern abzuführen, sind im Stand der Technik verschiedene Möglichkeiten bekannt. Im einfachsten Fall wird das das Wälzlager umgebende Gehäuse mit Wasser oder Öl gekühlt, um die Wärme vom Grundkörperlagerring abzuführen. Die Verluste des Wellenlagerrings können durch diese Maßnahme jedoch nur in begrenztem Umfang abgeführt werden. Dadurch können Temperaturdifferenzen zwischen Grundkörperlagerring und Wellenlagerring relativ groß werden. Der große Temperaturunterschied zwischen Grundkörperlagerring und Wellenlagerring wirkt sich negativ auf die kinematischen Verhältnisse im Wälzlager aus.

Um die entstehende Reibungswärme aus dem Wellenlagerring abzuführen, ist es im Stand der Technik in manchen Fällen erforderlich, eine Wellenkühlung vorzusehen. Wellenkühlungen sind jedoch sehr aufwändig und teuer.

Kostengünstiger und einfacher ist es, den Wellenlagerring mittels Luft zu kühlen, die direkt in den Bereich des Wälzlagers eingeblasen wird. Die Luft darf jedoch keine Schmutzpartikel enthalten, da anderenfalls der Verschleiß im Lager deutlich erhöht würde. Die Kosten für die Erzeugung komprimierter, sauberer Luft sind relativ hoch. Darüber hinaus ist die Wärmekapazität von Luft nur sehr gering.

Die Aufgabe der vorliegenden Erfindung besteht darin, Möglichkeiten zu schaffen, mittels derer bei schnell laufenden Maschinen der Wellenlagerring auf einfache Weise effizient gekühlt werden kann.

Die Aufgabe wird stofftechnisch durch ein Schmiermittel für Wälzlager einer Maschine mit den Merkmalen des Anspruchs 1 gelöst.

Erfindungsgemäß weist das Additiv einen Additivsiedepunkt auf, der weit unterhalb des Ölsiedepunkts liegt.

Das Additiv kann mit dem Öl über ein Bindemittel vermischt sein. Alternativ ist ein direktes und unmittelbares Zusetzen des Additivs zum Öl möglich.

Der Additivsiedepunkt liegt vorzugsweise mindestens 50 K, vorzugsweise sogar mindestens 100 K, unter dem Ölsiedepunkt. Vorzugsweise liegt der Additivsiedepunkt zwischen 40 °C und 100 °C, insbesondere zwischen 50 °C und 80 °C.

Das Additiv kann beispielsweise ein Alkohol sein. Als Alkohol kommen insbesondere Methanol (Siedepunkt 64,5 °C), Ethanol (Siedepunkt 78,3 °C) und Isopropanol (Siedepunkt 82 °C) in Frage.

Alternativ kann das Additiv der Gruppe der gesättigten oder ungesättigten Kohlenwasserstoffe angehören. Rein beispielhaft kommen unter den Alkanen insbesondere n-Hexan und n-Heptan in Frage. Weiterhin kommen auch i-Hexan und i-Heptan in Frage, insbesondere 2-Methylpentan, 2-Methylhexan, 2,2-Dimethylpentan und 2,4-Dimethylpentan. Auch Cyclopentan und Cyclohexan sowie Benzol kommen in Frage.

Auch andere Stoffe sind als Additiv verwendbar, beispielsweise Aldehyde, Ketone, Carbonsäuren und deren Ester und Salze, Ether, Polyole usw.

Maschinentechnisch wird die Aufgabe durch eine Maschine mit den Merkmalen des Anspruchs 6 gelöst. Erfindungsgemäß befindet sich in dem Schmiermittelreservoir ein erfindungsgemäßes Schmiermittel.

Die Schmiermittelzuführeinrichtungen können als einen Schmiermittelnebel erzeugende Zerstäuber ausgebildet sein. Alternativ können die Schmiermittelzuführeinrichtungen als die Wellenlagerringe mit dem Schmiermittel bespritzende Spritzdüsen ausgebildet sein.

In der Regel sind die Grundkörperlagerringe als Lageraußenringe und die Wellenlagerringe als Lagerinnenringe ausgebildet. Ausnahmsweise kann es jedoch umgekehrt sein.

Verfahrenstechnisch wird die Aufgabe durch ein Betriebsverfahren mit den Merkmalen des Anspruchs 10 gelöst. Erfindungsgemäß ist die Drehzahl derart, dass die Wellenlagerringe Wellenlagerringtemperaturen annehmen, auf Grund derer das Additiv aus dem auf die Wellenlagerringe aufgebrachten Schmiermittel ausdampft.

Weitere Vorteile und Einzelheiten ergeben sich aus der nachfolgenden Beschreibung von Ausführungsbeispielen. Es zeigen in Prinzipdarstellung:
- FIG 1: schematisch eine Maschine,
- FIG 2: schematisch eine Ausgestaltung eines Wälzlagers der Maschine von FIG 1,
- FIG 3: schematisch eine zu FIG 2 alternative Ausgestaltung des Wälzlagers,
- FIG 4: schematisch die Zusammensetzung eines Schmiermittels und
- FIG 5: mögliche Additive.

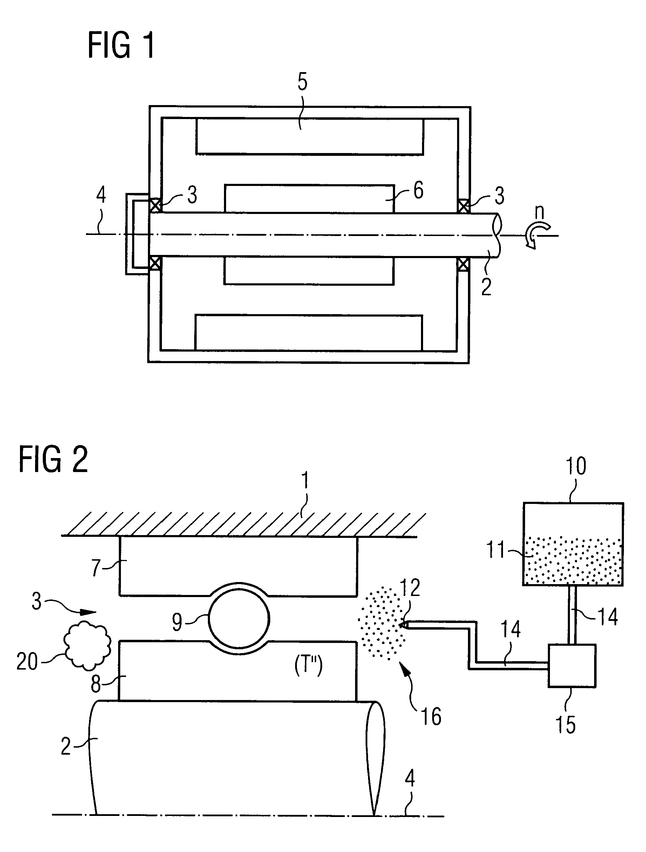

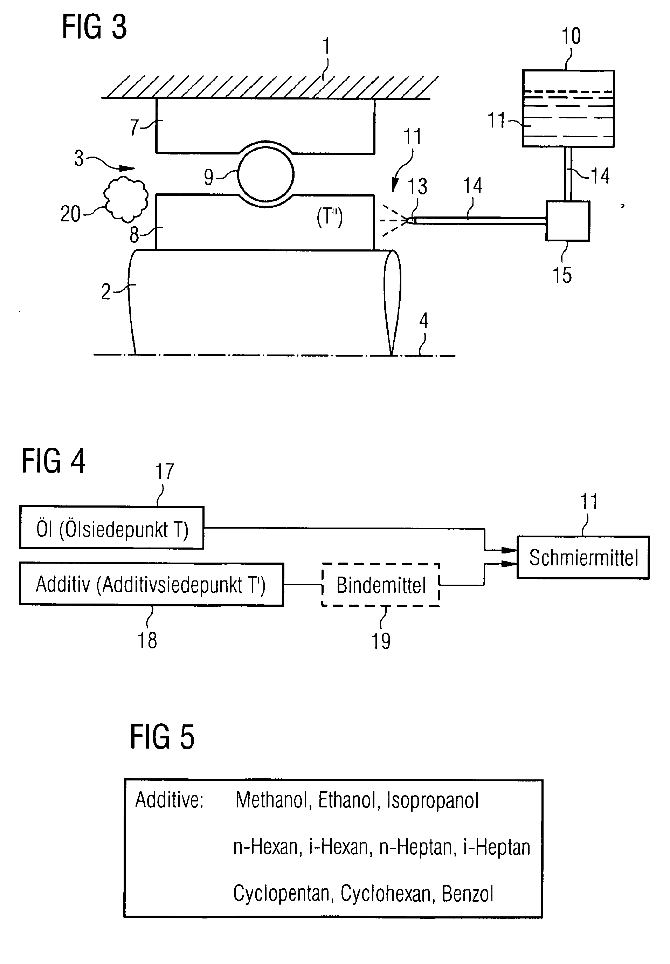

Gemäß FIG 1 weist eine Maschine einen Grundkörper 1 und eine Welle 2 auf. Die Welle 2 ist über Wälzlager 3 (vergleiche die FIG 2 und 3) relativ zum Grundkörper 1 drehbar gelagert, so dass die Welle 2 um eine Wellenachse 4 drehbar ist.

Die Maschine weist gemäß FIG 1 einen Stator 5 und einen Rotor 6 auf. Die Maschine ist also als elektrische Maschine ausgebildet. Die Maschine könnte jedoch auch als andere Maschine ausgebildet sein, beispielsweise als Turbine oder als Getriebe.

Die Wälzlager 3 weisen gemäß den FIG 2 und 3 jeweils einen relativ zum Grundkörper 1 ortsfesten Grundkörperlagerring 7 und einen relativ zur Welle 2 ortsfesten Wellenlagerring 8 auf. Zwischen den Grundkörperlagerringen 7 und den Wellenlagerringen 8 sind Wälzelemente 9 angeordnet. Die Wälzelemente 9 sind in den FIG 2 und 3 als Kugeln dargestellt. Sie könnten jedoch alternativ eine andere Gestalt aufweisen, beispielsweise als Nadeln, Walzen oder Kegel ausgebildet sein.

Gemäß der Darstellung in den FIG 1 bis 3 sind die Wälzlager 3 als Radiallager ausgebildet. Die Ausgestaltung als Radiallager ist jedoch rein beispielhaft. Alternativ könnten die Wälzlager 3 beispielsweise als Axiallager, als Kegellager, als Schrägkugellager usw. ausgebildet sein.

Gemäß den FIG 2 und 3 sind die Grundkörperlagerringe 7 als Lageraußenringe ausgebildet, die Wellenlagerringe 8 als Lagerinnenringe. Diese Ausgestaltung stellt den Regelfall dar. In Ausnahmefällen ist jedoch eine umgekehrte Ausgestaltung ebenfalls möglich.

Die Maschine weist gemäß den FIG 2 und 3 ein Schmiermittelreservoir 10 auf, in dem sich ein Schmiermittel 11 befindet. Weiterhin weist die Maschine gemäß den FIG 2 und 3 Schmiermittelzuführeinrichtungen 12, 13 auf. Die Schmiermittelzuführeinrichtungen 12, 13 sind über Leitungen 14 mit dem Schmiermittelreservoir 10 verbunden. Von den Schmiermittelzuführeinrichtungen 12, 13 ist das Schmiermittel 11 zumindest auf die Wellenlagerringe 8 aufbringbar. Alternativ ist es möglich, dass das Schmiermittel 11 zusätzlich auf weitere Elemente der Wälzlager 3 aufgebracht wird, insbesondere auf die Grundkörperlagerringe 7 und/oder die Wälzelemente 9. In den Leitungen 14 ist hierbei eine Pumpe 15 angeordnet, mittels derer das Schmiermittel 11 vom Schmiermittelreservoir 10 zu den Schmiermittelzuführeinrichtungen 12, 13 gefördert wird.

Die Schmiermittelzuführeinrichtungen 12, 13 können auf verschiedene Art und Weise ausgebildet sein. Gemäß FIG 2 sind die Schmiermittelzuführeinrichtungen 12 als Zerstäuber 12 ausgebildet, die einen Schmiermittelnebel 16 erzeugen. Der Schmiermittelnebel 16 benetzt in der Regel nicht nur die Wellenlagerringe 8, sondern auch die Wälzelemente 9 und die Grundkörperlagerringe 7 der Wälzlager 3. Gemäß FIG 3 sind die Schmiermittelzuführeinrichtungen 13 als Spritzdüsen 13 ausgebildet, welche (zumindest, vorzugsweise nur) die Wellenlagerringe 8 mit dem Schmiermittel 11 bespritzen.

Gemäß FIG 4 enthält das Schmiermittel 11 ein Öl 17 und mindestens ein Additiv 18. Das Öl 17 weist einen hohen Siedpunkt T auf, nachfolgend Ölsiedepunkt T genannt. Der Ölsiedepunkt T liegt in der Regel bei 200 °C oder darüber. Das Additiv 18 ist derart gewählt, dass es mit dem Öl 17 verträglich ist, d. h. mit dem Öl 17 nicht reagiert und insbesondere dessen Schmiereigenschaften nicht negativ beeinflusst. Das Additiv 18 weist einen relativ niedrigen Siedepunkt T' auf, nachfolgend Additivsiedepunkt T' genannt. Der Additivsiedepunkt T' liegt weit unterhalb des Ölsiedepunkts T. Der Begriff "weit unterhalb" soll hierbei bedeuten, dass die Differenz der beiden Siedepunkte T, T' mindestens 50 K beträgt, vorzugsweise sogar 80 °C oder 100 K. Beispielsweise kann der Additivsiedepunkt T' zwischen 40 K und 100 °C liegen, insbesondere zwischen 50 °C und 80 °C.

Es ist möglich, dass das Additiv 18 direkt mit dem Öl 17 vermischt ist. Alternativ ist es möglich, dass das Additiv 18 mit dem Öl 17 über ein Bindemittel 19 vermischt ist. Diese letztgenannte Variante ist in FIG 4 gestrichelt dargestellt.

Als Öl 17 kann jedes auch im Stand der Technik übliche Öl verwendet werden. Derartige Öle sind jedem Fachmann bekannt. Bezüglich des Öls 17 sind daher keine detaillierten Ausführungen erforderlich. Mögliche Additive 18 sind in FIG 5 dargestellt.

Gemäß FIG 5 kann das Additiv 18 ein Alkohol sein. Mögliche Alkohole sind insbesondere Methanol, Ethanol und Isopropanol.

Alternativ kann das Additiv 18 ein gesättigter oder ungesättigter Kohlenwasserstoff sein, beispielsweise ein Alkan. Beispiele geeigneter Alkane sind n-Hexan, 2-Methylpentan, n-Heptan und i-Heptan, insbesondere 2-Methylhexan, 2,2-Dimethylpentan und 2,4-Dimethylpentan.

Im Betrieb der Maschine wird die Welle 2 mit einer Drehzahl n rotiert. Während des Rotierens der Welle 2 wird auf die Wellenlagerringe 8 das Schmiermittel 11 aufgebracht. Die Drehzahl n ist derart, dass die Wellenlagerringe 8 auf Grund der in den Wälzlagern 3 auftretenden Reibung Wellenlagerringtemperaturen T" annehmen. Die Wellenlagerringtemperaturen T" sind hierbei derart hoch, dass das Additiv 18 aus dem auf die Wellenlagerringe 8 aufgebrachten Schmiermittel 11 ausdampft. Dies ist in den FIG 2 und 3 dadurch angedeutet, dass in diesen beiden FIG Additivdampf 20 dargestellt ist.

Die Wellenlagerringtemperatur T" ist zwar relativ hoch, aber niedriger (in der Regel 10 bis 30 K niedriger) als im Stand der Technik, bei dem ein konventionelles Schmiermittel, also ein Schmiermittel, welches das Additiv 18 nicht enthält, auf die Wellenlagerringe 8 aufgebracht wird.

Auf Grund der erfindungsgemäßen Lehren können die Wellenlagerringe 8 effizient gekühlt werden. Anderenfalls mögliche Schäden der Wälzlager 3 werden vermieden.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Schmiermittel für Wälzlager (3) einer Maschine,
- wobei das Schmiermittel ein Öl (17) enthält, das einen Ölsiedepunkt (T) aufweist,
- wobei das Schmiermittel mindestens ein mit dem Öl (17) verträgliches Additiv (18) enthält, das einen Additivsiedepunkt (T') aufweist, der weit unterhalb des Ölsiedepunkts (T) liegt.

2. Schmiermittel nach Anspruch 1, **dadurch gekennzeichnet, dass** das Additiv (18) mit dem Öl (17) über ein Bindemittel (19) vermischt ist.

3. Schmiermittel nach Anspruch 1 oder 2, **dadurch gekennzeichnet, dass** der Additivsiedepunkt (T') zwischen 40 °C und 100 °C liegt, insbesondere zwischen 50 °C und 80 °C.

4. Schmiermittel nach Anspruch 1, 2 oder 3, **dadurch gekennzeichnet, dass** das Additiv (18) ein Alkohol ist.

5. Schmiermittel nach Anspruch 1, 2 oder 3, **dadurch gekennzeichnet, dass** das Additiv (18) ein Kohlenwasserstoff ist.

6. Maschine, insbesondere elektrische Maschine,
- wobei die Maschine Wälzlager (3) aufweist, in denen eine Welle (2) der Maschine relativ zu einem Grundkörper (1) der Maschine drehbar gelagert ist,
- wobei die Wälzlager (3) jeweils einen relativ zum Grundkörper (1) ortsfesten Grundkörperlagerring (7) und einen relativ zur Welle (2) ortsfesten Wellenlagerring (8) aufweisen,
- wobei zwischen den Grundkörperlagerringen (7) und den Wellenlagerringen (8) Wälzelemente (9) angeordnet sind,
- wobei die Maschine ein Schmiermittelreservoir (10) aufweist, in dem sich ein Schmiermittel (11) nach einem der obigen Ansprüche befindet,
- wobei die Maschine Schmiermittelzuführeinrichtungen (12, 13) aufweist, die mit dem Schmiermittelreservoir (10) verbunden sind und von denen das Schmiermittel (11) zumindest auf die Wellenlagerringe (8) aufbringbar ist.

7. Maschine nach Anspruch 6, **dadurch gekennzeichnet, dass** die Schmiermittelzuführeinrichtungen (12) als einen Schmiermittelnebel (16) erzeugende Zerstäuber (12) ausgebildet sind.

8. Maschine nach Anspruch 6, **dadurch gekennzeichnet, dass** die Schmiermittelzuführeinrichtungen (13) als die Wellenlagerringe (8) mit dem Schmiermittel (11) bespritzende Spritzdüsen (13) ausgebildet sind.

9. Maschine nach Anspruch 6, 7 oder 8, **dadurch gekennzeichnet, dass** die Grundkörperlagerringe (7) als Lageraußenringe und die Wellenlagerringe (8) als Lagerinnenringe ausgebildet sind.

10. Betriebsverfahren für eine Maschine nach einem der Ansprüche 6 bis 9,
- wobei die Welle (2) mit einer Drehzahl (n) rotiert wird,
- wobei auf die Wellenlagerringe (8) ein Schmiermittel (11) nach einem der Ansprüche 1 bis 5 aufgebracht wird,
- wobei die Drehzahl (n) derart ist, dass die Wellenlagerringe (8) Wellenlagerringtemperaturen (T") annehmen, aufgrund derer das Additiv (18) aus dem auf die Wellenlagerringe (8) aufgebrachten Schmiermittel (11) ausdampft.
